# EUROPÄISCHE PATENTSCHRIFT

(11) **EP 2 364 806 B1**
(45) Veröffentlichungstag und Bekanntmachung des Hinweises auf die Patenterteilung: **27.03.2013**
(21) Anmeldenummer: 11151482.4
(22) Anmeldetag: 20.01.2011
(51) Int. Cl.: B23D 61/02, B23D 61/12, B27B 19/00

(54) **Trennwerkzeug**
Separation tool
Outil de séparation

(30) Priorität: 12.03.2010 DE 102010012019
(43) Veröffentlichungstag der Anmeldung: 14.09.2011
(73) Patentinhaber: C. & E. Fein GmbH, 73529 Schwäbisch Gmünd-Bargau (DE)
(72) Erfinder: Mann, Rainer, 73434, Aalen-Unterrombach (DE)
(74) Vertreter: Witte, Weller & Partner

(56) Entgegenhaltungen:
- EP-A1- 0 695 607
- EP-A2- 0 881 023
- EP-A2- 1 190 800
- DE-A1- 3 838 844
- DE-A1- 10 325 392
- DE-U1- 29 819 959
- GB-A- 2 107 641
- US-A- 2 853 106
- US-A- 5 468 247
- US-A- 5 846 244
- US-A1- 2007 123 893

## Beschreibung

Die Erfindung betrifft ein Werkzeug zum Trennen, insbesondere zum Sägen, mit einem Trägerblatt mit einem Verzahnungsabschnitt mit einer endlichen, geometrisch bestimmten Verzahnung, mit einer Aufnahme zur Festlegung an einer um ihre Längsachse oszillierend antreibbaren Werkzeugspindel eines Handwerkzeugs, wobei die Verzahnung von der Aufnahme beabstandet angeordnet und für einen Vorschub senkrecht zur Längsachse ausgebildet ist, und wobei die Verzahnung entlang des Verzahnungsabschnitts ungleichmäßig ausgeführt ist.

Ein derartiges Werkzeug ist aus der EP 1 190 800 A2 bekannt.

Weitere Sägewerkzeuge sind aus den Dokumenten US 5 468 247 A, US 2 853 106 A, GB 2 107 641 A, EP 0 881 023 A2, US 5 846 244 A, EP 0 695 607 A1 und US 2007/123893 A1 bekannt.

Die DE 298 19 959 U1 offenbart ein Werkzeug in Form eines Hubsägeblattes. Aus der DE 38 38 844 A1 ist ein Werkzeug in Form eines Stichsägeblattes bekannt.

Ein weiteres Trennwerkzeug ist aus der EP 0 881 023 A2 bekannt.

Dabei handelt es sich um ein Schneid- und Schleifwerkzeug für einen Oszillationsantrieb, das eine Schneide aufweist, die mit Zähnen versehen ist. Die Schneide ist an einer Platte angeordnet, die unmittelbar im Anschluss an die Schneide einen Bereich ausweist, der schmaler als die Schneide ausgebildet ist.

Derartige Werkzeuge kommen bei Oszillationsantrieben häufig zum Einsatz. Dabei kann sich insbesondere beim Sägen oder Schneiden eine hohe Anwendungsvielfalt ergeben.

Mit solchen oszillatorisch betriebenen Werkzeugen können insbesondere Einstiche, Durchbrüche und Öffnungen in ein zu bearbeitendes Material eingebracht werden. Derartige Bearbeitungen können besonders genau und nahezu ohne Verschnitt erfolgen, da kein wesentlicher Werkzeugauslauf erforderlich ist. Neben dem Vorschub braucht dabei von einem Bediener für den Trennvorgang keine weitere wesentliche Relativbewegung zwischen dem Werkzeug und dem zu bearbeitenden Werkstück bewirkt werden.

Es hat sich jedoch gezeigt, dass derartige Trennwerkzeuge, insbesondere im Rahmen der vorgenannten Anwendungen, nur eine begrenzte Lebensdauer aufweisen.

Vor diesem Hintergrund liegt der Erfindung die Aufgabe zugrunde, ein Trennwerkzeug, insbesondere ein Sägewerkzeug, für einen Drehoszillationsantrieb anzugeben, das eine erhöhte Standzeit aufweist. Ferner sollen verschleiß- oder bruchbedingte Ausfälle möglichst vermieden werden und die mögliche Schnittleistung im Zeitablauf im Wesentlichen erhalten bleiben.

Diese Aufgabe wird bei einem Werkzeug gemäß der eingangs genannten Art dadurch gelöst, dass der Verzahnungsabschnitt mit einem Mittelbereich versehen ist und an diesen angrenzende Endbereiche aufweist, die mit geometrisch verstärkten Eckzähnen versehen sind, und dass die Verzahnung mit abgerundeten Zahngründen versehen ist, wobei die Zahngründe in den Endbereichen größere Radien als die Zahngründe im Mittelbereich aufweisen.

Die Aufgabe der Erfindung wird auf diese Weise gelöst.

Erfindungsgemäß werden nämlich die Bereiche verstärkt, die hohen Belastungen ausgesetzt sind, um Frühausfälle oder erhöhten Verschleiß zu vermeiden.

Gerade bei Anwendungen, bei denen der gesamte Verzahnungsabschnitt in ein Werkstück eindringt, also etwa bei der Schaffung des Durchbruchs durch eine Platte, Wand oder dergleichen, unterliegen vor allem die Eckzähne einer hohen Belastung. Dies geht unter anderem darauf zurück, dass die Eckzähne bestimmungsgemäß nur auf einer Seite, zum Mittelbereich hin, benachbarte Zähne aufweisen, folglich auf der anderen Seite nicht durch andere Zähne geschützt sind.

Bei anderen üblichen Sägeanwendungen sind Sägewerkzeuge dagegen entweder vollumfänglich mit einer Verzahnung versehen, etwa bei Kreissägen, so dass jeder Zahn beidseitig durch benachbarte Zähne entlastet bzw. gestützt ist. Zum anderen sind, etwa bei Stichsägen, besondere Zahnausläufe an Sägeblättern vorgesehen, so dass Endzähne durch angrenzende Stützgeometrien einen gewissen Schutz erfahren. Es ist jedoch anzumerken, dass diese Sägewerkzeuge naturgemäß niemals vollständig mit ihrer gesamten Verzahnung im Eingriff stehen. Deshalb können derartige Maßnahmen nicht bei drehoszillatorisch angetriebenen Werkzeugen erfolgen, da sie die Anwendungsmöglichkeiten einschränken würden.

Im Rahmen der Erfindung wurde auf diese Eigenart besondere Rücksicht genommen. Durch die gezielte geometrische Verstärkung der Eckzähne kann nun eine Werkzeuggestalt bewirkt werden, die bei vollständigem Eingriff des Verzahnungsabschnitts in ein Werkstück eine gleichmäßige Belastung der einzelnen Zähne der Verzahnung ermöglicht, indem das Belastungsniveau der Eckzähne gesenkt wird. Durch Verrundungen der Zahngründe kann der Spannungsverlauf im Verzahnungsabschnitt günstig gestaltet werden. Das Spannungsniveau im Bereich der Zahngründe kann reduziert werden, Kerbwirkungen im Übergang zwischen zwei Zähnen, insbesondere durch diese bedingte Spannungskonzentrationen, können vermieden werden.

Die Radien in den Zahngründen der Endbereiche sind größer als in den Zahngründen der Mittelbereiche ausgeführt, so dass eine weitere Verstärkung der Eckzähne zur weiteren Verschleißreduzierung und Erhöhung der Standzeit bewirkt werden kann.

Auf diese Weise können frühzeitige Brüche der Eckzähne wirksam vermieden werden. Die Standzeit des Werkzeugs kann sich erhöhen.

Gemäß einer bevorzugten Ausgestaltung der Erfindung weisen die Eckzähne eine geringere Zahntiefe als benachbarte Zähne der Verzahnung auf.

Auf diese Weise können die Endbereiche des Verzahnungsabschnitts besonders einfach verstärkt werden, auch wenn Zahnspitzen von Zähnen der Verzahnung weiterhin gleich ausgeführt werden. Bei einer geringeren Zahntiefe ist insbesondere der Zahnfuß der Eckzähne verstärkt und kann somit höheren Belastungen standhalten.

Vorteilhaft wird die Zahntiefe der Eckzähne im Vergleich zu den Zahntiefen benachbarter Zähne der Verzahnung derart ausgelegt, dass die Gesamtschnittleistung der Verzahnung nicht wesentlich beeinflusst wird.

Es kann dabei eine Ausgestaltung umgesetzt werden, bei der die Zahntiefe zwischen einzelnen Zähnen ausgehend vom Mittelbereich in Richtung auf die Endbereiche kontinuierlich verringert wird.

Durch diese Maßnahme kann ein besonders gleichmäßiger Verlauf des Belastungsniveaus der Zähne der Verzahnung gewährleistet werden.

Gemäß einer zweckmäßigen Ausgestaltung der Erfindung weist der Verzahnungsabschnitt eine variable Zahnteilung auf, wobei die Zahnteilung in den Endbereichen kleiner als im Mittelbereich ausgeführt ist.

Auf diese Weise kann bei im Wesentlichen identischer Zahnkontur durch einfache Variation der Teilung, also des Abstands von Zahnspitze zu Zahnspitze, eine Verstärkung der Endbereiche bewirkt werden. Dies erfolgt, indem Zähne in den Endbereichen näher zueinander "aufrücken", so dass sich bei den Eckzähnen in Folge kleinere Zahnlücken und eine Auffüllung der Zahnfüße ergeben.

Dabei können die Flanken der Eckzähne, auch bezeichnet als Zahnbrust und Zahnrücken, gleiche Steigungen und geometrisch ähnliche, lediglich verkleinerte Konturen wie benachbarte Zähne aufweisen.

Ferner kann bei dieser Ausgestaltung, bei der in den Endbereichen aufgrund der kleineren Zahnteilung geringere Zahntiefen vorherrschen, gleichwohl durch die höhere Anzahl an Zahnspitzen, die die Verzahnung aufweist, eine hohe Abtrags- bzw. Schnittleistung bewirkt werden, da nun mehr Zähne zum Eingriff gelangen.

Die Zahnteilung kann im Mittelbereich konstant ausgebildet sein und zu den Eckzähnen hin abrupt absinken. Alternativ ist denkbar, die Zahnteilung entlang des Verzahnungsabschnitts kontinuierlich in kleinen Schritten zu variieren.

Gemäß einer alternativen bevorzugten Ausgestaltung der Erfindung weist der Verzahnungsabschnitt eine variable Zahnteilung auf, wobei die Zahnteilung in den Endbereichen größer als im Mittelbereich ausgeführt ist.

Auch durch diese Maßnahme kann die Verstärkung der Eckzähne besonders einfach und wirksam erfolgen, da durch die größere Zahnteilung in den Endbereichen zwischen den Eckzähnen und benachbarten Zähnen mehr Material vorgesehen sein kann, um die Festigkeit der Eckzähne weiter zu verbessern.

In diesem Zusammenhang ist anzumerken, dass ein Bruch eines Eckzahns häufig im Bereich seines Zahnfußes erfolgen kann. Nunmehr können jedoch die Eckzähne gerade in diesem Bereich verbreitert werden, so dass sie deutlich größeren Belastungen standhalten können.

Im Rahmen dieser Ausgestaltung kann sich eine wirksame Verstärkung der Eckzähne ergeben, auch wenn diese gleiche Zahntiefen wie benachbarte Zähne aufweisen sollen.

Gemäß einer weiteren bevorzugten Ausgestaltung der Erfindung sind die Eckzähne mit Übergangsflanken versehen, die flachere Bereiche als die Flanken benachbarter Zähne aufweisen.

Diese Maßnahme hat den Vorteil, dass unabhängig von der Wahl einer variablen oder konstanten Zahnteilung bzw. Zahntiefe eine Verstärkung der Eckzähne erfolgen kann. Hierbei gewinnen die Eckzähne insgesamt eine "stumpfere" Kontur, die massivere Ausgestaltung ermöglicht es den Eckzähnen, hohe Belastungen noch besser zu ertragen.

Es sei dabei angemerkt, dass auch bei einer "stumpfen" Kontur der Eckzähne deren Zahnspitzen gleichwohl genügend spitz bzw. scharf ausgestaltet sein können, so dass die Schnittleistung der Eckzähne nicht wesentlich beeinfluss wird. Da nun die Eckzähne verschleiß- und bruchfester ausgeführt sind, kann sich insgesamt über die Lebensdauer des Werkzeugs sogar eine höhere Schnittleistung ergeben.

Gemäß einem weiteren bevorzugten Aspekt der Erfindung weisen die Eckzähne Zahnspitzen auf, die breiter ausgebildet sind als die Zahnspitzen benachbarter Zähne.

Somit kann auch der Bereich der Zahnspitzen der Eckzähne verstärkt ausgeführt sein, wodurch sich die Verschleißfestigkeit und Standzeit des Werkzeugs weiter erhöhen lassen.

Ferner kann durch diese Maßnahme ein übermäßiges Verhaken bzw. Einhaken der Zahnspitzen der Eckzähne im Werkzeug vermieden werden, so dass sich die Gefahr eines Bruchs der Zahnspitzen oder einer Einleitung von Kräften, die die Eckzähne im Bereich der Zahnfüße schädigen können, deutlich verringern kann.

In bevorzugter Weiterbildung der Erfindung weist die Verzahnung eine Schränkung auf.

Durch diese Maßnahme kann zum einen eine Klemmgefahr des Werkzeugs in der Schnittfuge verringert werden, zum anderen können die Spanabfuhr und die Kühlung im Schnitt verbessert werden. Auch dadurch kann der Werkzeugverschleiß weiter minimiert werden.

Die Schränkung kann bei unmittelbar aufeinanderfolgenden Zähnen erfolgen, indem jeweils ein Zahn in eine Richtung und der darauf folgende Zahn in die andere Richtung angestellt werden. Alternativ kann die Schränkung auch unter Auslassung von Zähnen erfolgen, so dass diese in Vorschubrichtung im Wesentlichen eine gerade Erstreckung aufweisen. Es kann also etwa jeder zweite oder dritte Zahn angestellt sein. Schließlich kann sich die Schränkung auch wellenförmig entlang des Verzahnungsabschnitts erstrecken, wobei der Verlauf einer Halbwelle jeweils durch die Spitzen mehrerer aufeinanderfolgender Zähne angedeutet ist.

Gemäß einem weiteren bevorzugten Aspekt der Erfindung ist eine Abkröpfung zwischen der Aufnahme und dem Verzahnungsabschnitt vorgesehen.

Durch die Abkröpfung wird ein Versatz zwischen der Aufnahme und dem Verzahnungsabschnitt realisierbar. Der Versatz stellt eine axiale Verlagerung des Verzahnungsabschnitts von der Aufnahme in Richtung der Längsachse dar.

Hierdurch wird ein bündiges Arbeiten mit dem Werkzeug ermöglicht, auch wenn die Aufnahme des Werkzeugs an der Werkzeugspindel des Handwerkzeugs axial von beiden Seiten gehalten ist.

Somit können Anwendungen, bei denen das Werkzeug unmittelbar entlang einer Wand parallel zu dieser geführt werden muss, ermöglicht werden. Es lassen sich dabei etwa Überstände, z.B. Rohre oder Leitungen, bündig an Wänden trennen.

Gemäß einer weiteren bevorzugten Ausgestaltung der Erfindung weist die Aufnahme ein Formschusselement zur formschlüssigen Aufnahme an der Werkzeugspindel auf.

Auf diese Weise kann die Kraftübertragung beim Antrieb des Werkzeugs mittels der um ihre Längsachse oszillierend antreibbaren Werkzeugspindel großflächig und mit hoher Sicherheit erfolgen, so dass hohe Momente und große Leistungen übertragen werden können.

Vorzugsweise weist die Aufnahme dabei ein Profil in Form einer Verzahnung und die Werkzeugspindel eine damit korrespondierende Gegenverzahnung auf, so dass eine hohe Anzahl an Wirkflächen zur Verfügung steht.

Bei einer formschlüssigen Aufnahme kann ein Durchrutschen des Werkzeugs an der Werkzeugspindel sowie ein damit einhergehender übermäßiger Verschleiß wirksam vermieden werden.

Vorzugsweise kann die formschlüssige Aufnahme des Werkzeugs mit Kraftschlusselementen kombiniert werden, wobei der Kraftschluss im Wesentlichen lediglich der Sicherung des Formschlusses dient.

In zweckmäßiger Weiterbildung der Erfindung ist das Trägerblatt aus mehreren Metallkomponenten ausgebildet.

Somit können die Vorteile verschiedener Metalle bzw. Metalllegierungen kombiniert werden, etwa indem eine Komponente besonders gehärtet und eine andere Komponente besonders zäh ausgebildet ist.

Besonders bevorzugt ist dabei eine Kombination aus einem Schnellarbeitsstahl, einem HSS-Stahl, der eine hohe Härte aufweisen kann, sowie einem Kohlenstoffstahl, einem HCS-Stahl, der eine besondere Zähigkeit aufweisen kann.

Es versteht sich, dass alternativ oder zusätzlich auch eine lokale Behandlung der verwendeten Metallkomponente oder Metallkomponenten erfolgen kann, um die Verschleißbeständigkeit und die Bruchfestigkeit des Werkzeugs, insbesondere der Verzahnung, noch weiter zu erhöhen.

Dabei ist eine Oberflächenhärtung im Bereich der Zähne, vor allem der unmittelbar in das Werkstück eingreifenden Zahnflanken angebracht, während im Bereich der Zahnfüße Maßnahmen zur Erhöhung der Zähigkeit bevorzugt sind, um Brüche in diesem Bereich vermeiden zu können.

Gemäß einer weiteren bevorzugten Ausgestaltung der Erfindung weist die Verzahnung eine Beschichtung zur Festigkeitssteigerung und/oder zur Verschleißminimierung auf.

Durch diese Maßnahme kann sich die Standzeit des Werkzeugs noch wirksamer erhöhen.

Eine Beschichtung kommt vorteilhaft insbesondere dann zum Tragen, wenn beim Trennen der Werkstückabtrag teilweise oder ausschließlich durch Schleifvorgänge zwischen dem Werkzeug und dem Werkstück erfolgt.

Auch bei einem reinen Sägewerkzeug kann eine festigkeitssteigernde und/oder verschleißminimierende Beschichtung vorteilhaft zur Anwendung gelangen.

Die Beschichtung kann dabei mit Hartmetall, zum Beispiel auf Basis von Wolframcarbid, mit technischen Keramikwerkstoffen, etwa auf Basis von Aluminiumoxid, oder mit Diamantwerkstoffen erfolgen. Geeignete Kombinationen, insbesondere auch mit Träger- bzw. Vermittlerwerkstoffen, sind denkbar.

Auf diese Weise kann das Werkzeug auch zum Trennen von Metallwerkstoffen zur Verwendung kommen, ohne dass ein übermäßiger Verschleiß zu befürchten ist.

Gemäß einem weiteren bevorzugten Aspekt der Erfindung ist die Verzahnung im Verzahnungsabschnitt im Wesentlichen gerade oder kreisbogenförmig ausgeführt.

Somit kann das Werkzeug besonders gut an verschiedene Anwendungsfälle angepasst sein.

Mit einem Werkzeug, dessen Verzahnung gerade ausgeführt ist, können auch in Vorschubrichtung bündige Schnitte ausgeführt werden, ohne dass ein wesentlicher Werkzeugauslauf erforderlich ist.

Mit einem Werkzeug, dessen Verzahnung kreisbogenförmig ausgebildet ist, kann besonders gut in Eckbereichen gearbeitet werden.

Es ist anzumerken, dass die Verzahnung auch als Kombination gerader und/oder kreisbogenförmiger Abschnitte, die gegebenenfalls winklig oder tangential zusammengeführt sind, ausgestaltet sein kann.

Auf diese Weise kann etwa trotz der, wenn auch nur bei kleinen Verschwenkwinkeln erfolgenden, Oszillationen, also der stetigen Hin- und Her-Bewegung des Werkzeugs, beim Eintauchen in ein Werkstück ein nahezu gerader Schnittverlauf senkrecht zur Vorschubrichtung bewirkt werden. Mit anderen Worten kann bei einer Hin- und Her-Bewegung des Werkzeugs jede Zahnspitze der Zähne der Verzahnung trotz der Schwenkbewegung des Werkzeugs einen Punkt auf einer gedachten Gerade einnehmen, die das maximale Eintauchen des Werkzeugs im Werkstück beschreibt.

In Kombination mit einem Handwerkzeug mit einem Gehäuse, mit einer um ihre Längsachse drehoszillierend antreibbaren Werkzeugspindel mit einer Befestigung zur Aufnahme eines Werkzeugs kann das erfindungsgemäße Trennwerkzeug vielfältig zur Anwendung gelangen. Dabei kommen wesentliche Vorteile, insbesondere der hohe Verschleißschutz und die deutlich reduzierte Bruchanfälligkeit der Verzahnung, in besonderem Maße zur Geltung.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine perspektivische Darstellung eines Handwerkzeugs mit einem erfindungsgemäßen Trennwerkzeug;
- Fig. 2a, 2b: eine Aufsicht sowie einen vergrößerten Ausschnitt eines ersten Trennwerkzeugs;
- Fig. 3a, 3b: eine Aufsicht sowie einen vergrößerten Ausschnitt eines weiteren Trennwerkzeugs;
- Fig. 4a, 4b: eine Aufsicht sowie einen vergrößerten Ausschnitt noch eines weiteren Trennwerkzeugs;
- Fig. 5: eine Seitenansicht des Trennwerkzeugs gemäß Fig. 4a;
- Fig. 6: einen vergrößerten Ausschnitt eines gegenüber Fig. 4b abgewandelten Trennwerkzeugs;
- Fig. 7a, 7b: eine Aufsicht sowie einen vergrößerten Ausschnitt eines erfindungsgemäßen Trennwerkzeugs;
- Fig. 8a, 8b: eine Aufsicht sowie einen vergrößerten Ausschnitt eines weiteren erfindungsgemäßen Trennwerkzeugs;
- Fig. 9a, 9b: eine Aufsicht sowie einen vergrößerten Ausschnitt eines weiteren Trennwerkzeugs; und
- Fig. 10a, 10b: eine Aufsicht sowie einen vergrößerten Ausschnitt eines weiteren Trennwerkzeugs.

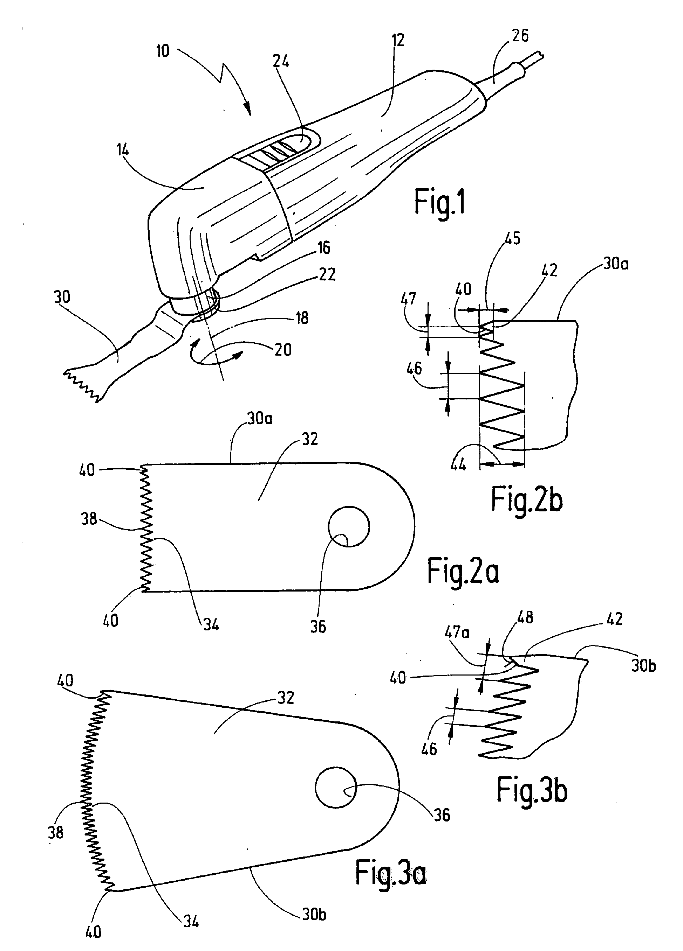

In Fig. 1 ist ein Handwerkzeug mit einem Oszillationsantrieb dargestellt und insgesamt mit 10 bezeichnet.

Das Handwerkzeug 10 weist ein Gehäuse 12 sowie in seinem vorderen Bereich einen Getriebekopf 14 auf. Ferner ist ein Oszillationsantrieb (nicht dargestellt) vorgesehen, der dazu ausgebildet ist, eine Werkzeugspindel 16, die im Bereich des Getriebekopfes 14 angeordnet ist, um eine Längsachse 18 drehoszillierend anzutreiben, wie durch einen mit 20 bezeichneten Pfeil angedeutet.

An der Werkzeugspindel 16 ist ein Werkzeug 30 festgelegt und mittels einer Befestigung 22 gesichert.

Zur Energieversorgung weist das Handwerkzeug 10 eine Versorgungsleitung 26 auf, welche an ein elektrisches Versorgungsnetz anschließbar ist. Es ist bekannt, dass derartige Handwerkzeuge auch mittels Akkumulatoren, hydraulischen oder pneumatischen Antrieben betrieben sein können.

Ein Bediener kann das Handwerkzeug 10 im Bereich des Gehäuses 12 umgreifen und über einen Schalter 24 wahlweise aktivieren oder deaktivieren.

Handwerkzeuge mit einem Drehoszillationsantrieb haben aufgrund ihrer Anwendungsvielfalt eine hohe Verbreitung erfahren. Sie können zum Trennen, Sägen, Schneiden, Schleifen oder Polieren vielfältig genutzt werden.

Der Oszillationsantrieb bewirkt dabei eine alternierende Bewegung des Werkzeugs 30 um die Werkzeugspindel 16, die etwa bei einer Frequenz von ca. 5.000 bis 25.000 Oszillationen pro Minute und bei einem Verschwenkwinkel von ca. 0,5° bis 7° erfolgt.

Diese Parameter ermöglichen ein nahezu geradliniges Eintauchen des Werkzeugs 30 in ein zu bearbeitendes Werkstück. Somit können mit dem Handwerkzeug 10 besonders einfach bei geringem Aufwand eckige Aussparungen und Durchbrüche durch Werkstücke geschaffen werden. Eine weitere bevorzugte Anwendung ist das bündige Abtrennen von Leitungen, Latten oder dergleichen an Böden, Decken oder Wänden. Derartige Anwendungsfälle können mit anderen Werkzeugen nur mit Einschränkungen oder gar nicht abgedeckt werden.

Insbesondere bei einem Trennvorgang, bei dem das Werkzeug 30 vollständig in das Werkstück eintaucht, ist die gesamte Verzahnung im Eingriff. Es ist erkannt worden, dass bei solchen Einsatzfällen an der Verzahnung vor allem bei Eckzähnen in Randbereichen des Werkzeugs 30 ein erhöhter Verschleiß auftreten kann.

Bei im Stand der Technik bekannten Werkzeugen ist die Verzahnung entlang eines Verzahnungsabschnitts im Regelfall gleichmäßig ausgeführt. Insbesondere in Endbereichen sind Eckzähne häufig nicht vollständig ausgebildet, diese sind häufig im Bereich ihrer Zahnspitzen nach außen hin abgeschnitten und folglich nur als Halbzähne ausgestaltet.

Im Rahmen der vorliegenden Erfindung wird eine besondere Zahngeometrie insbesondere der Eckzähne vorgeschlagen, um ein leistungsfähiges, verschleißfestes und bruchunempfindliches Werkzeug zu schaffen, das für die genannten Anwendungsgebiete in hohem Maße geeignet ist.

In den Fig. 2a, 2b ist eine erste Ausgestaltung eines Werkzeugs dargestellt und mit 30a bezeichnet.

Das Werkzeug 30a weist ein Trägerblatt 32 auf, an dessen einem Ende ein Verzahnungsabschnitt 34 vorgesehen ist. An dem dem Verzahnungsabschnitt 34 abgewandten Ende des Trägerblatts 32 ist eine Aufnahme 36 zur Festlegung an der Werkzeugspindel 16 des Handwerkzeugs 10 angeordnet. Das Trägerblatt 32 erstreckt sich ausgehend vom Verzahnungsabschnitt 34 flächig in Richtung auf die Aufnahme und weist dabei parallele oder sich leicht verjüngende Seite auf.

Der Verzahnungsabschnitt 34 umfasst die Verzahnung und ist in einem Mittelbereich 38 sowie diesen begrenzende Endbereiche 40 unterteilt.

Fig. 2b zeigt eine vergrößerte Darstellung des Endbereichs 40. Hierbei ist ein Eckzahn 42 vorgesehen, der gegenüber benachbarten Zähnen im Bereich des Zahngrunds verstärkt ist. Vorliegend ist die Verstärkung durch eine Zahntiefe 45, die kleiner als die Zahntiefe 44 eines benachbarten Zahns ausgeführt ist, sowie die Zahnteilung 47, die kleiner als die Zahnteilung 46 eines benachbarten Zahns ausgeführt ist, bewerkstelligt.

Es ist anzumerken, dass jede dieser Maßnahmen unabhängig voneinander zu einer Verstärkung des Eckzahns 42 führt.

Anhand Fig. 2b ist ferner ersichtlich, dass die Zahntiefe ausgehend vom Mittelbereich 38 über mehrere Stufen hin zu den Endbereichen 40 absinkt. Alternativ ist vorstellbar, dass die Zahntiefe fast entlang des gesamten Verzahnungsabschnitts 34 konstant ausgeführt ist und lediglich unmittelbar bei den Eckzähnen 42 sinkt.

Mit der in Fig. 2b gezeigten Ausgestaltung kann trotz der Verstärkung des Eckzahns 42 eine hohe Schnittleistung gewährleistet werden. Zwar ist anzunehmen, dass bestimmte Zähne, die im Gegensatz zu anderen Zähnen eine verringerte Zahntiefe aufweisen, nicht den gleichen Abtrag bzw. das gleiche Spanvolumen bewirken können. Da vorliegend jedoch neben der Verringerung der Zahntiefe eine Verringerung der Zahnteilung im Endbereich 40 erfolgt ist, kommen dabei im Gegensatz zum Mittelbereich 38 pro Längenbereich mehr Zähne zum Eingriff, so dass weiterhin eine hohe Schnittleistung ermöglicht ist.

Es ist anzumerken, dass die gezeigte Darstellung der Zahnflanken lediglich schematischer Natur ist, aus Gründen der Darstellbarkeit und Verständlichkeit wurde auf die Andeutung eines konkreten Schliffbildes sowie eine nähere Veranschaulichung von Zahnrücken und Zahnbrust verzichtet. Es versteht sich freilich, dass übliche Zahnformen, Schliffe und sonstige Charakteristika einer Verzahnung zum Trennen, insbesondere zum Sägen, zur Verwendung kommen können.

Ferner wurde aus Gründen der Übersichtlichkeit auf die zeichnerische Darstellung von verschleißhemmenden oder festigkeitssteigernden Beschichtungen oder aber Zonen bestimmter Wärmebehandlungen verzichtet. Gleichwohl versteht es sich, dass derartige Maßnahmen zur Verbesserung des Schnittverhaltens und der Standzeit des Werkzeugs 30a genutzt werden können.

In Fig. 3a ist ein weiteres Werkzeug 30b dargestellt. Das Werkzeug 30b weist einen Verzahnungsabschnitt 34 auf, der als Kreisbogen ausgebildet ist. Ein Trägerblatt 32 verjüngt sich deutlich in Richtung auf eine Aufnahme 36.

Aus Fig. 3b ist wiederum ersichtlich, dass ein Eckzahn 42, der in einem Endbereich 40 angeordnet ist, gegenüber benachbarten Zähnen verstärkt ist. Im Gegensatz zur Ausgestaltung des Werkzeugs 30a gemäß Fig. 2b ist die Verstärkung des Eckzahns 42 hier durch eine Übergangsflanke 48 bewirkt, die flacher als die Flanken benachbarter Zähne verläuft.

Ferner weist der Endbereich 40 eine Teilung 47a auf, die größer ist als eine Teilung 46 benachbarter Zähne. Durch diese Maßnahme ist genügend Freiraum geschaffen worden, so dass der Eckzahn 42 trotz der abgeflachten Übergangsflanke 48 eine Zahntiefe aufweisen kann, die der benachbarter Zähne vergleichbar ist. Auch dabei kann sich trotz der erhöhten Verschleiß- und Bruchsicherheit weiterhin eine hohe Schnittleistung ergeben.

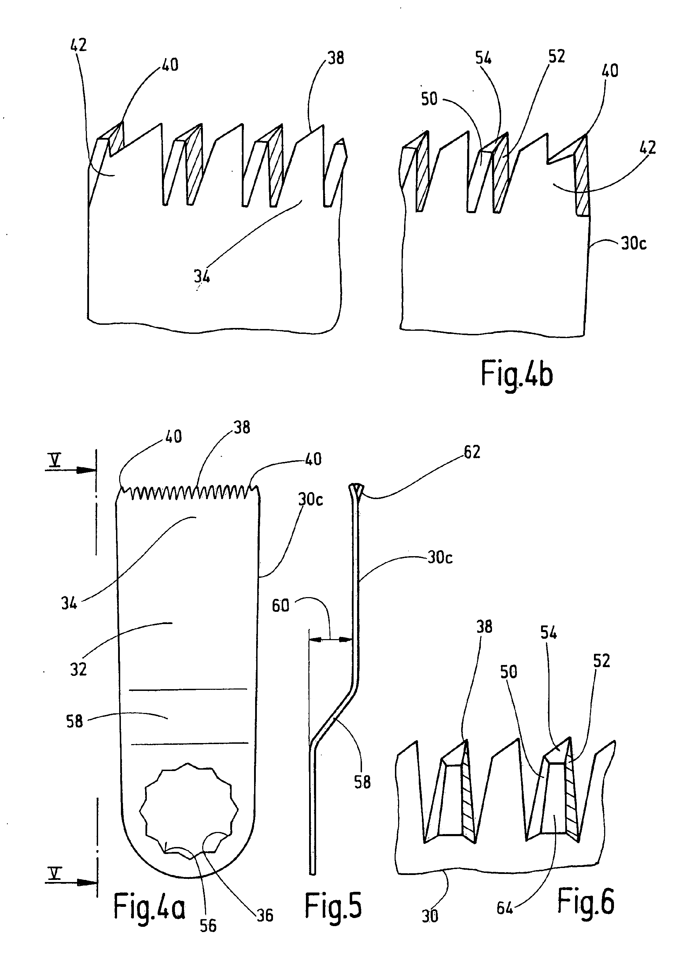

Anhand der Fig. 4a, 4b wird eine weitere Ausgestaltung eines Werkzeugs 30c erläutert.

Wie oben bereits erwähnt, ist es möglich, runde und im Wesentlichen gerade Abschnitte zu kombinieren, um ein besonders vorteilhaftes Schnittverhalten zu erzielen. So kann die Verzahnung mehrere gerade Abschnitte aufweisen, die einen stumpfen Winkel einschließen.

Fig. 4b zeigt, im Gegensatz zu den Fig. 2b, 3b, eine detailliertere Darstellung eines Verzahnungsabschnitts 34. Die Verzahnung ist dabei als sogenannte Japan-Verzahnung ausgeführt. Diese ist durch einen bestimmte Zahnform und durch einen bestimmten Schliff, verkörpert durch die Flächen 50, 52, 54, gebildet. Dadurch und aufgrund einer hohen Härte ist die Verzahnung für eine Vielzahl von Anwendungen und Werkstoffen geeignet.

Die Verstärkung von Eckzähnen 42 in Endbereichen 40 wird dabei durch eine verringerte Zahntiefe bewirkt, wobei die Zahnteilung entlang des Verzahnungsabschnitts 34 im Wesentlichen konstant ist. Fig. 4a zeigt ferner eine bevorzugte Ausgestaltung zur Aufnahme des Werkzeugs 30c auf. Hierzu weist eine Öffnung 36 ein Formschlusselement 56 auf, das als Vielzahnkontur ausgebildet ist. Ist an der Werkzeugspindel 16 am Handwerkzeug 10 eine entsprechende Gegenkontur vorgesehen, so ergibt sich eine besonders sichere Verbindung, die ein hohes Moment übertragen kann.

In Fig. 5 ist eine Seitenansicht des Werkzeugs 30c dargestellt. Dabei ist eine durch einen mit 60 bezeichneten Pfeil beschriebene Abkröpfung angedeutet. Diese wird durch einen doppelt abgewinkelten Übergang 58 im Trägerblatt 32 bewirkt. Die Abkröpfung 60 ermöglicht ein bündiges Arbeiten mit dem Werkzeug 30c, auch wenn im Bereich einer Aufnahme 36 bei der Befestigung des Werkzeugs 30c an der Werkzeugspindel 16 des Handwerkzeugs 10 zwangsläufig die Befestigung 22 übersteht, wie anhand Fig. 1 zu erkennen ist.

Ferner ist eine Schränkung 62 angedeutet, welche dazu dienen soll, eine Trennfuge etwas breiter als ein Trägerblatt 32 auszuführen, um ein Klemmen des Werkzeugs 30c zu vermeiden und die Abführung von Spänen sowie von beim Schnitt entstehender Wärme zu unterstützen. Vorliegend ist die Schränkung 62 vereinfacht überzeichnet dargestellt.

Eine gegenüber der Fig. 4b abgewandelte Verzahnungsform einer Japan-Verzahnung ist in Fig. 6 gezeigt. Es ist dabei eine gesonderte Flanke 64 vorgesehen, infolge dessen ist eine Flanke 54 trapezförmig ausgeführt.

Mit der in Fig. 6 gezeigten Zahnform kann sich eine besondere Eignung für spezielle Anforderungen ergeben. Es versteht sich, dass eine Verstärkung von Eckzähnen in Endbereichen analog der anhand der Fig. 2b, 3b und 4b erläuterten Maßnahmen erfolgen kann.

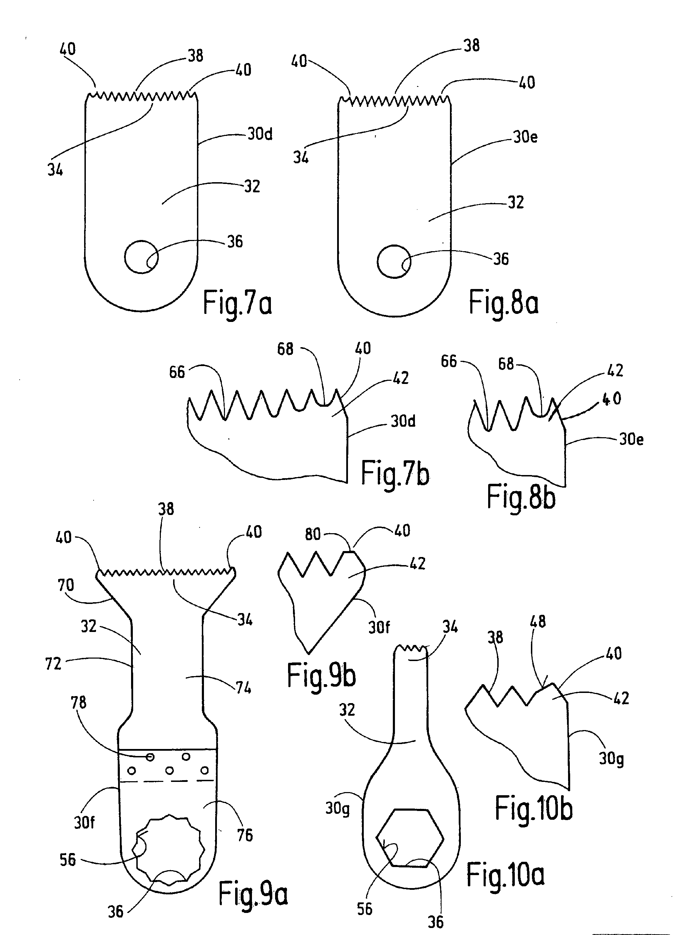

Die Fig. 7a, 8a, 9a und 10a stellen weitere Ausgestaltungen von Werkzeugen 30d, 30e, 30f, 30g dar. Hierbei sind jeweilige Endbereiche 40 anhand der Fig. 7b, 8b, 9b sowie 10b vergrößert dargestellt.

Die Figuren 7a, 7b, 8a, 8b stellen erfindungsgemäße Ausgestaltungen von Werkzeugen 30d, 30e dar.

In den Fig. 7b, 8b ist eine Verstärkung von Eckzähnen 42 durch eine Verrundung von Zahngründen 68 der Eckzähne 42 angedeutet. Hierbei ist die Verrundung der Zahngründe 68 größer als eine Verrundung von Zahngründen 66 benachbarter Zähne ausgeführt. Es ergibt sich dabei wiederum bei den Eckzähnen 42 eine im Gegensatz zu benachbarten Zähnen verringerte Zahntiefe.

Es ist anzumerken, dass eine Verrundung der Zahngründe 66, 68 eine geeignete Maßnahme darstellt, um Brüche im Fußbereich von Zähnen wirksam zu vermeiden.

Die Ausgestaltung gemäß der Fig. 7a, 7b unterscheidet sich von der der Fig. 8a, 8b dadurch, dass bei Erstgenannter eine kontinuierliche Vergrößerung der Verrundung ausgehend vom Mittelbereich 38 hin zum Endbereich 40 erfolgt, während bei Letztgenannter kleine Verrundungen von Zahngründen 66 abrupt in große Verrundungen von Zahngründe 68 von Eckzähne 42 übergehen.

In Fig. 9a ist ein Werkzeug 30f dargestellt, bei dem das Trägerblatt eine deutliche Verjüngung bzw. Ausklinkung 72 aufweist, die ausgehend von einem Verzahnungsabschnitt 34 durch eine Schräge 70 eingeleitet ist. Somit ist hinter dem Verzahnungsabschnitt 34 am Trägerblatt 32 ein deutlich schmalerer Bereich ausgebildet. Eine derartige Gestaltung eignet sich besonders gut zur Abführung von Spänen und bewirkt eine geringere Wärmeentwicklung.

Das Trägerblatt 32 ist vorliegend aus einer ersten Komponente 74 sowie einer zweiten Komponente 76 aufgebaut. Die erste Komponente 74 und die zweite Komponente 76 sind durch eine Verbindung 78, die als Nietverbindung, Schweißverbindung oder Ähnliches ausgeführt sein kann, verbunden. Eine mehrkomponentige Gestaltung des Trägerblatts 32 ermöglicht eine vorteilhafte Kombination verschiedener Werkstoffeigenschaften. So können beispielsweise besonders harte Werkstoffe, etwa für den Verzahnungsabschnitt 34, mit ausreichend zähen, weniger harten Werkstoffen, etwa für den Bereich der Aufnahme 36, kombiniert werden.

In Fig. 9b ist ein Eckzahn 42 eines Endbereichs 40 dargestellt, bei dem eine Zahnspitze 80 im Vergleich zu benachbarten Zähnen wesentlich breiter ausgebildet ist. Auch dies stellt eine geeignete Maßnahme dar, um den Eckzahn 42 zu verstärken.

In den Fig. 10a, 10b ist schließlich ein Werkzeug 30g dargestellt, bei dem der Verzahnungsabschnitt 34 besonders schmal ausgeführt ist. Folglich können damit besonders schmale Einstiche, deren Tiefe ein Vielfaches der Länge betragen kann, in Werkstücke eingebracht werden.

Die Aufnahme 36 weist dabei beispielhaft ein Formschlusselement 56 in Form eines Sechskants auf. Gleichwohl versteht es sich, dass andere geeignete Formschlusselemente zur Verbindung des Werkzeugs 30g mit der Werkzeugspindel 16 des Handwerkzeugs 10 zur Verwendung kommen können.

Die verhältnismäßig schmale Gestaltung des Verzahnungsabschnitts 34 bedingt eine relativ geringe Zähnezahl. Insofern sind Eckzähne 42 in Endbereichen 40 der Verzahnung besonders belastet und können gegenüber Brüchen anfällig sein.

Zur Verstärkung des Eckzahns 42 ist in Fig. 10b wiederum eine Übergangsflanke 48 ausgeführt, welche wesentlich flacher als die Flanken gegenüberliegender Zähne ausgebildet ist. Folglich ist der Eckzahn 42 im Bereich seiner Zahnwurzel deutlich verbreitert und weniger bruchanfällig.

Im Rahmen der Erfindung wurde ein verbessertes Werkzeug zum Trennen, insbesondere zum Sägen, geschaffen, das den besonderen Anforderungen und Anwendungen drehoszillatorisch betriebener Handwerkzeuge genüge trägt und auch bei Eintauchschnitten sowie vergleichbaren Anwendungen, bei denen die Eckzähne der Verzahnung besonders gefährdet sind, eine hohe Verschleißbeständigkeit und Sicherheit gegenüber Brüchen der Eckzähne aufbieten kann.

## Patentansprüche

1. Werkzeug zum Trennen, insbesondere zum Sägen, mit einem Trägerblatt (32) mit einem Verzahnungsabschnitt (34) mit einer endlichen, geometrisch bestimmten Verzahnung, mit einer Aufnahme (36) zur Festlegung an einer um ihre Längsachse (18) oszillierend antreibbaren Werkzeugspindel (16) eines Handwerkzeuges (10), wobei die Verzahnung von der Aufnahme (36) beabstandet angeordnet und für einem Vorschub senkrecht zur Längsachse (18) ausgebildet ist, und wobei die Verzahnung entlang des Verzahnungsabschnitts (34) ungleichmäßig ausgeführt ist, **dadurch gekennzeichnet, dass** der Verzahnungsabschnitt (34) mit einem Mittelbereich (38) versehen ist und an diesen angrenzende Endbereiche (40) aufweist, die mit geometrisch verstärkten Eckzähnen (42) versehen sind, und dass die Verzahnung mit abgerundeten Zahngründen (66, 68) versehen ist, wobei die Zahngründe (68) in den Endbereichen (40) größere Radien als die Zahngründe (66) im Mittelbereich (38) aufweisen.

2. Werkzeug nach Anspruch 1, **dadurch gekennzeichnet, dass** die Eckzähne (42) eine geringere Zahntiefe (45) als benachbarte Zähne der Verzahnung aufweisen.

3. Werkzeug nach einem der vorhergehenden Ansprüche, **dadurch gekennzeichnet, dass** der Verzahnungsabschnitt (34) eine variable Zahnteilung (46, 47) aufweist, wobei die Zahnteilung in den Endbereichen (40) kleiner als im Mittelbereich (38) ausgeführt ist.

4. Werkzeug nach einem der Ansprüche 1 oder 2, **dadurch gekennzeichnet, dass** der Verzahnungsabschnitt (34) eine variable Zahnteilung (46, 47a) aufweist, wobei die Zahnteilung in den Endbereichen (40) größer als im Mittelbereich (38) ausgeführt ist.

5. Werkzeug nach einem der vorhergehenden Ansprüche, **dadurch gekennzeichnet, dass** die Eckzähne (42) mit Übergangsflanken (48) versehen sind, die flachere Bereiche als die Flanken benachbarter Zähne aufweisen.

6. Werkzeug nach einem der vorhergehenden Ansprüche, **dadurch gekennzeichnet, dass** die Eckzähne (42) Zahnspitzen (80) aufweisen, die breiter ausgebildet sind als die Zahnspitzen benachbarter Zähne.

7. Werkzeug nach einem der vorhergehenden Ansprüche, **dadurch gekennzeichnet, dass** die Verzahnung eine Schränkung (62) aufweist.

8. Werkzeug nach einem der vorhergehenden Ansprüche, **gekennzeichnet durch** einen Versatz (60) zwischen der Aufnahme (36) und dem Verzahnungsabschnitt (34).

9. Werkzeug nach einem der vorhergehenden Ansprüche, **dadurch gekennzeichnet, dass** die Aufnahme (36) ein Formschlusselement (56) zur formschlüssigen Aufnahme an der Werkzeugspindel (16) aufweist.

10. Werkzeug nach einem der vorhergehenden Ansprüche, **dadurch gekennzeichnet, dass** das Trägerblatt (32) aus mehreren Metallkomponenten (74, 76) ausgebildet ist.

11. Werkzeug nach einem der vorhergehenden Ansprüche, **dadurch gekennzeichnet, dass** die Verzahnung eine Beschichtung zur Festigkeitssteigerung und/oder zur Verschleißminimierung aufweist.

12. Werkzeug nach einem der vorhergehenden Ansprüche, **dadurch gekennzeichnet, dass** die Verzahnung im Verzahnungsabschnitt (34) im Wesentlichen gerade oder kreisbogenförmig ausgeführt ist.

13. Handwerkzeug mit einem Gehäuse (12), mit einer um ihre Längsachse (18) drehoszillierend antreibbaren Werkzeugspindel (16) mit einer Befestigung (22) zur Aufnahme eines Werkzeugs, mit einem Werkzeug (30, 30a, 30b, 30c, 30d, 30e, 30f, 30g) nach einem der vorhergehenden Ansprüche.

## Claims

1. Tool for parting, in particular for sawing, having a carrier blade (32) that has a toothing portion (34) having a finite, geometrically determined toothing, having a support (36) for fixing to a tool spindle (16) of a hand tool (10), which tool spindle can be driven in oscillation about its longitudinal axis (18), the toothing being disposed at a distance from the support (36) and being configured to be advanced perpendicularly in relation to the longitudinal axis (18), wherein the toothing is configured in a non-uniform manner along the toothing portion (34), **characterized in that** the toothing portion (34) is provided with a middle region (38) and having end regions (40) that adjoin the latter and that are provided with geometrically strengthened corner teeth (42), and **in that** the toothing is provided with rounded tooth gullets (66, 68), the tooth gullets (68) in the end regions (40) having greater radii than the tooth gullets (66) in the middle region (38).

2. Tool according to Claim 1, **characterized in that** the corner teeth (42) have a lesser tooth depth (45) than adjacent teeth of the toothing.

3. Tool according to either one of the preceding claims, **characterized in that** the toothing portion (34) has a variable tooth pitch (46, 47), the tooth pitch being configured so as to be less in the end regions (40) than in the middle region (38).

4. Tool according to either one of Claims 1 or 2, **characterized in that** the toothing portion (34) has a variable tooth pitch (46, 47a), the tooth pitch being configured so as to be greater in the end regions (40) than in the middle region (38).

5. Tool according to any one of the preceding claims, **characterized in that** the corner teeth (42) are provided with transition flanks (48), which have flatter regions than the flanks of adjacent teeth.

6. Tool according to any one of the preceding claims, **characterized in that** the corner teeth (42) have tooth tips (80) that are configured so as to be broader than the tooth tips of adjacent teeth.

7. Tool according to any one of the preceding claims, **characterized in that** the toothing has a set (62).

8. Tool according to any one of the preceding claims, **characterized by** an offset (60) between the support (36) and the toothing portion (34).

9. Tool according to any one of the preceding claims, **characterized in that** the support (36) has a positive-closure element (56) for receiving on the tool spindle (16) in a positive-closure manner.

10. Tool according to any one of the preceding claims, **characterized in that** the carrier blade (32) is composed of a plurality of metal components (74, 76).

11. Tool according to any one of the preceding claims, **characterized in that** the toothing has a coating for the purpose of increasing strength and/or minimizing wear.

12. Tool according to any one of the preceding claims, **characterized in that** the toothing is configured in the toothing portion (34) so as to be substantially straight or arcuate.

13. Power tool having a housing (12), having a tool spindle (16) that can be driven in rotary oscillation about its longitudinal axis (18) and has a fastening (22) for receiving a tool, having a tool (30, 30a, 30b, 30c, 30d, 30e, 30f, 30g) according to any one of the preceding claims.

## Revendications

1. Outil pour séparer, notamment pour scier, comprenant une lame de support (32) avec une portion de denture (34) avec une denture sans fin, définie géométriquement, avec un logement (36) pour fixer un outil manuel (10) à une broche d'outil (16) pouvant être entraînée en oscillation autour de son axe longitudinal (18), la denture étant disposée à distance du logement (36) et étant réalisée pour permettre une avance perpendiculairement à l'axe longitudinal (18), et la denture étant réalisée de manière non uniforme le long de la portion de denture (34), **caractérisé en ce que** la portion de denture (34) est pourvue d'une région centrale (38) et présente des régions d'extrémité (40) adjacentes à celle-ci, qui sont pourvues de dents de coin (42) renforcées géométriquement, et **en ce que** la denture est munie de bases de dents arrondies (66, 68), les bases de dents (68) présentant dans les régions d'extrémité (40) des rayons plus grands que les bases de dents (66) dans la région centrale (38).

2. Outil selon la revendication 1, **caractérisé en ce que** les dents de coin (42) présentent une plus petite profondeur de dent (45) que des dents adjacentes de la denture.

3. Outil selon l'une quelconque des revendications précédentes, **caractérisé en ce que** la portion de denture (34) présente une division de dents variable (46, 47), la division de dents étant réalisée de manière à être plus petite dans les régions d'extrémité (40) que dans la région centrale (38).

4. Outil selon l'une quelconque des revendications 1 ou 2, **caractérisé en ce que** la portion de denture (34) présente une division de dents (46, 47a), la division de dents étant réalisée de manière à être plus grande dans les régions d'extrémité (40) que dans la région centrale (38).

5. Outil selon l'une quelconque des revendications précédentes, **caractérisé en ce que** les dents de coin (42) sont pourvues de flancs de transition (48) qui présentent des régions plus plates que les flancs de dents adjacentes.

6. Outil selon l'une quelconque des revendications précédentes, **caractérisé en ce que** les dents de coin (42) présentent des pointes de dents (80) qui sont réalisées sous forme plus large que les pointes de dents de dents adjacentes.

7. Outil selon l'une quelconque des revendications précédentes, **caractérisé en ce que** la denture présente un avoyage (62).

8. Outil selon l'une quelconque des revendications précédentes, **caractérisé par** un décalage (60) entre le logement (36) et la portion de denture (34).

9. Outil selon l'une quelconque des revendications précédentes, **caractérisé en ce que** le logement (36) présente un élément d'engagement par correspondance géométrique (56) pour la réception par engagement par correspondance géométrique au niveau de la broche d'outil (16).

10. Outil selon l'une quelconque des revendications précédentes, **caractérisé en ce que** la lame de support (32) se compose de plusieurs composants métalliques (74, 76).

11. Outil selon l'une quelconque des revendications précédentes, **caractérisé en ce que** la denture présente un revêtement pour augmenter la solidité et/ou pour minimiser l'usure.

12. Outil selon l'une quelconque des revendications précédentes, **caractérisé en ce que** la denture dans la portion de denture (34) est réalisée sensiblement sous forme droite ou en arc de cercle.

13. Outil manuel avec un boîtier (12), avec une broche d'outil (16) pouvant être entraînée en oscillation rotative autour de son axe longitudinal (18) avec une fixation (22) pour recevoir un outil, avec un outil (30, 30a, 30b, 30c, 30d, 30e, 30f, 30g) selon l'une quelconque des revendications précédentes.
